# FASCICULE DE BREVET EUROPEEN

(11) **EP 3 237 348 B1**
(45) Date de publication et mention de la délivrance du brevet: **05.08.2020**
(21) Numéro de dépôt: 15825619.8
(22) Date de dépôt: 22.12.2015
(51) Int. Cl.: C03C 17/22, C03C 17/36

(54) **VITRAGE COMPRENANT UN REVETEMENT PROTECTEUR**
VERGLASUNG MIT EINER SCHUTZBESCHICHTUNG
GLAZING COMPRISING A PROTECTIVE COATING

(30) Priorité: 23.12.2014 FR 1463253
(43) Date de publication de la demande: 01.11.2017
(73) Titulaire: SAINT-GOBAIN GLASS FRANCE, 92400 Courbevoie (FR)
(72) Inventeur: MAILLET, Alexandre, 60200 Compiegne (FR); SINGH, Laura Jane, 75011 Paris (FR)
(74) Mandataire: Saint-Gobain Recherche
(86) Numéro de dépôt international: PCT/FR2015/053734
(87) Numéro de publication internationale: WO 2016/102897

(56) Documents cités:
- WO-A1-2009/115596
- US-A1- 2003 143 401

## Description

L'invention concerne un matériau et un procédé d'obtention d'un matériau, tel qu'un vitrage, comprenant un substrat transparent revêtu d'un empilement de couches minces agissant sur le rayonnement infrarouge comprenant au moins une couche fonctionnelle.

Les matériaux comprenant des empilements agissant sur le rayonnement infrarouge sont utilisés dans des vitrages dits « de contrôle solaire » visant à diminuer la quantité d'énergie solaire entrante et/ou dans des vitrages dits « bas émissifs » visant à diminuer la quantité d'énergie dissipée vers l'extérieur d'un bâtiment ou d'un véhicule.

Les couches fonctionnelles sont déposées entre des revêtements à base de matériaux diélectriques qui comprennent généralement plusieurs couches diélectriques permettant d'ajuster les propriétés optiques de l'empilement.

La résistance mécanique de ces empilements complexes est souvent insuffisante et cela, a fortiori, lorsque les couches fonctionnelles sont des couches métalliques à base d'argent (ou couches d'argent). Cette faible résistance se traduit par l'apparition à court terme de défauts tels que des points de corrosion, des rayures, voire de l'arrachement total ou partiel de l'empilement lors de son utilisation dans des conditions normales. Tous défauts ou rayures, qu'ils soient dus à la corrosion ou à des sollicitations mécaniques, sont susceptibles d'altérer non seulement l'esthétique du substrat revêtu mais également ses performances optiques et énergétiques.

Des couches supérieures de protection sont classiquement utilisées à diverses fins, notamment pour améliorer la résistance aux rayures, la résistance à la corrosion humide et la résistance aux traitements thermiques à température élevée.

Dans le cas des vitrages « contrôle solaire » ou « bas émissifs », on cherche en général à ne pas augmenter significativement l'absorption dans le visible. Cette contrainte doit être prise en compte dans le choix des matériaux constituant l'empilement et notamment des couches supérieures de protection.

On connait par exemple des couches supérieures de protection à base d'oxyde de titane ou d'oxyde mixte de zinc et d'étain. Ces couches supérieures de protection sont peu absorbantes. Cependant, les substrats revêtus de telles couches ne présentent pas une résistance aux rayures suffisante.

Il est également connu d'utiliser des couches de carbone sous forme graphite ou amorphe pour améliorer la résistance aux rayures.

La demande internationale WO 2009/115596 A1 décrit des vitrage transparents comportant un système de couches minces présentant des propriétés antisolaires et bas-émissives, comportant une couche de protection inférieure à base de titane et de zirconium et une couche de protection supérieure en carbone.

Les couches de carbone amorphe dites DLC (« Diamond-Like-Carbon ») comprennent des atomes de carbone dans un mélange d'état d'hybridation sp2 et sp3. De telles couches ne sont pas déposables par un procédé magnétron classique. Elles sont en général obtenues par dépôt chimique en phase vapeur assisté par un plasma (PECVD), par ablation laser, par pulvérisation par arc ou par dépôt par faisceau d'ion.

Les couches de carbone dites « graphite » comprennent des atomes de carbone essentiellement dans un état d'hybridation sp2. De telles couches augmentent considérablement l'absorption dans le visible et l'infrarouge du matériau les comprenant. Par conséquent, ces couches sont utilisées soit comme couche de protection temporaire, soit à de faibles épaisseurs.

Lorsque les couches de carbone graphite sont utilisées comme couche de protection temporaire, elles peuvent être éliminées lors d'un traitement thermique, par oxydation en dioxyde de carbone. L'absorption résiduelle après traitement thermique est minime.

Lorsque les couches de carbone graphite sont utilisées à des épaisseurs de l'ordre d'un nanomètre, l'amélioration de la résistance aux rayures peut être insuffisante.

Il existe un besoin de protéger plus efficacement les substrats revêtus d'empilements agissant sur le rayonnement infrarouge comprenant des couches fonctionnelles pendant les étapes de fabrication, de transformation, de transport et/ou de stockage. Il existe également un besoin d'améliorer la résistance aux rayures des substrats revêtus d'empilement agissant sur le rayonnement infrarouge sans modifier les propriétés optiques telles que l'absorption dans le visible.

Le demandeur a découvert de manière surprenante que l'utilisation d'un revêtement protecteur comprenant au moins deux couches, une couche de protection inférieure à base de titane et de zirconium et une couche de protection supérieure à base de carbone graphite permet d'améliorer considérablement la résistance aux rayures.

Le revêtement protecteur selon l'invention est efficace même lorsque la couche de protection supérieure à base de carbone est extrêmement fine notamment inférieure à 1 nm. Selon ce mode de réalisation, la résistance aux rayures est améliorée sans modifier les propriétés optiques telles que l'absorption dans le visible.

L'invention concerne un matériau comprenant un substrat transparent revêtu d'un empilement de couches minces agissant sur le rayonnement infrarouge comprenant au moins une couche fonctionnelle, caractérisé en ce que l'empilement comprend un revêtement protecteur déposé au-dessus d'au moins une partie de la couche fonctionnelle, le revêtement protecteur comprenant :
- au moins une couche de protection inférieure à base de titane et de zirconium, ces deux métaux étant sous forme métallique, oxydée ou nitrurée,
- au moins une couche de protection supérieure de carbone dont l'épaisseur est inférieure ou égale à 2 nm, au sein de laquelle les atomes de carbone sont essentiellement dans un état d'hybridation sp2 située au-dessus de la couche à base de titane et de zirconium.

La couche de protection inférieure à base de titane et de zirconium comprend ces deux métaux étant sous forme métallique, oxydée ou nitrurée (ci-après à base de titane et de zirconium). Cette couche de protection inférieure présente par ordre de préférence croissant un rapport en poids de titane sur zirconium Ti/Zr compris entre 60/40 et 90/10, entre 60/40 et 80/20, entre 60/40 et 70/30, entre 60/40 et 65/35.

La couche de protection inférieure à base de titane et de zirconium présente par ordre de préférence croissant un rapport atomique de titane sur zirconium Ti/Zr compris entre 70/30 et 95/5, entre 70/30 et 85/15, entre 70/30 et 80/20.

Les couches d'oxyde de titane et de zirconium peuvent être déposées à partir d'une cible céramique de TiZrOx. Le rapport de titane sur zirconium Ti/Zr dans la couche est quasiment équivalent à celui de la cible.

Les cibles céramiques peuvent éventuellement comprendre d'autres éléments que l'on retrouve dans les couches déposées à partir de ces cibles.

La couche de protection inférieure a une épaisseur :
- inférieure ou égale à 10 nm, inférieure ou égale à 7 nm ou inférieure ou égale à 5 nm, et/ou
- supérieure ou égale à 1 nm, supérieure ou égale à 2 nm ou supérieure ou égale à 3 nm.

La couche de protection supérieure de carbone utilisée comprend des atomes de carbone formant des liaisons carbone-carbone essentiellement dans un état d'hybridation sp2. On considère que les atomes de carbone de la couche sont essentiellement dans un état d'hybridation sp2 quand au moins 80 %, au moins 90 %, voire au moins 100 % des atomes de carbone sont dans un état d'hybridation sp2. L'hybridation des atomes de carbone peut-être caractérisée par spectroscopie infrarouge à transformée de Fourier (FTIR).

La couche de carbone selon l'invention diffère de par cette caractéristique des couches dites DLC qui sont des couches de carbone amorphe éventuellement hydrogéné comprenant des atomes de carbone dans un mélange d'état d'hybridation sp2 et sp3, de préférence essentiellement sp3. Les atomes de carbone ne sont pas essentiellement dans un état d'hybridation sp2.

La couche de protection supérieure de carbone selon l'invention peut être obtenue par pulvérisation cathodique assistée par champ magnétique, par exemple à l'aide d'une cible de graphite. L'atmosphère dans l'enceinte de dépôt comprend un gaz neutre, de préférence de l'argon.

Selon un mode de réalisation, la couche de protection supérieure a une épaisseur :
- inférieure à 1 nm et/ou
- supérieure ou égale à 0,1 nm, supérieure ou égale à 0,2 nm, supérieure ou égale à 0,5 nm.

Selon un mode de réalisation avantageux, la couche de protection supérieure a une épaisseur strictement inférieure à 1 nm, de préférence comprise entre 0,2 et 0,8 nm. Ces fines couches de carbone ne modifient pas significativement l'absorption dans le visible. Ces couches ne doivent pas être nécessairement éliminées même lorsque l'on recherche des transmissions lumineuses élevées.

Le revêtement protecteur composé de deux couches de protection selon l'invention apporte une amélioration significative de la résistance à la rayure par rapport à des couches de protection classiques permanentes, c'est-à-dire non destinées à être éliminées, à base de dioxyde de titane (TiO₂), d'oxyde mixte de zinc et d'étain (SnZnOx).

Selon ce mode de réalisation, la variation de l'absorption lumineuse dans le visible Δabs induite par la couche de protection supérieure est inférieure à 10 %, de préférence inférieure à 5 % et mieux inférieure à 2 %. La variation est obtenue en mesurant l'absorption lumineuse d'un substrat revêtu d'un empilement ne comprenant pas de couche de protection supérieure (Abs. réf) et d'un même substrat revêtu comprenant la couche protection supérieure (Abs Inv) puis en réalisant le calcul suivant : ΔAbs = (Abs réf - Abs inv).

Toutes les caractéristiques lumineuses présentées dans la présente description sont obtenues selon les principes et méthodes décrits dans la norme européenne EN 410 se rapportant à la détermination des caractéristiques lumineuses et solaires des vitrages utilisés dans le verre pour la construction. Par Abs., on entend au sens de la présente description l'absorption à incidence normale, sous l'illuminant D65 avec un champ de vision de 2°.

L'utilisation d'un revêtement protecteur comprenant notamment une couche supérieure de protection présentant une faible épaisseur conduit à d'excellentes propriétés de résistance aux rayures tout en maintenant l'absorption dans le visible faible.

L'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques et les couches sont des couches minces. On entend par couche mince, une couche présentant une épaisseur comprise entre 0,1 nm et 100 micromètres.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une ou plusieurs couches intercalées entre ces deux couches.

La couche fonctionnelle est choisie parmi :
- une couche fonctionnelle métallique à base d'argent ou d'un alliage métallique contenant de l'argent,
- une couche fonctionnelle métallique à base de niobium,
- une couche fonctionnelle à base de nitrure de niobium.

Les couches fonctionnelles sont de préférence des couches fonctionnelles métalliques à base d'argent.

Une couche fonctionnelle métallique à base d'argent comprend au moins 95,0 %, de préférence au moins 96,5 % et mieux au moins 98,0 % en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

L'épaisseur des couches fonctionnelles à base d'argent est par ordre de préférence croissant comprise de 5 à 20 nm, de 8 à 15 nm.

Les couches d'argent sont déposées entre des revêtements à base de matériaux diélectriques qui comprennent généralement plusieurs couches diélectriques permettant d'ajuster les propriétés optiques de l'empilement. Ces couches diélectriques permettent en outre de protéger la couche d'argent des agressions chimiques ou mécaniques. L'empilement de couches minces comprend donc avantageusement au moins une couche métallique fonctionnelle à base d'argent, au moins deux revêtements à base de matériaux diélectriques, chaque revêtement comportant au moins une couche diélectrique, de manière à ce que chaque couche métallique fonctionnelle soit disposée entre deux revêtements à base de matériaux diélectriques.

Les revêtements à base de matériaux diélectriques présentent une épaisseur supérieure à 15 nm, de préférence comprise entre 15 et 50 nm et mieux de 30 à 40 nm.

Les couches diélectriques des revêtements à base de matériaux diélectriques présentent les caractéristiques suivantes seules ou en combinaison :
- elles sont déposées par pulvérisation cathodique assistée par champ magnétique,
- elles sont choisies parmi les couches diélectriques à fonction barrière ou à fonction stabilisante,
- elles sont choisies parmi les oxydes ou nitrures d'un ou plusieurs éléments choisi(s) parmi le titane, le silicium, l'aluminium, l'étain et le zinc,
- elles ont une épaisseur supérieure à 5 nm, de préférence comprise entre 8 et 35 nm.

On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les couches diélectriques à fonction barrière peuvent être à base de composés de silicium et/ou d'aluminium choisis parmi les oxydes tels que SiO₂, les nitrures tels que les nitrure de silicium Si₃N₄ et les nitrures d'aluminium AIN, et les oxynitrures SiOₓN_{y}, éventuellement dopé à l'aide d'au moins un autre élément. Les couches diélectriques à fonction barrière peuvent également être à base à base d'oxyde de zinc et d'étain.

On entend par couches diélectriques à fonction stabilisante, une couche en un matériau apte à stabiliser l'interface entre la couche fonctionnelle et cette couche. Les couches diélectriques à fonction stabilisante sont de préférence à base d'oxyde cristallisé, notamment à base d'oxyde de zinc, éventuellement dopé à l'aide d'au moins un autre élément, comme l'aluminium. La ou les couches diélectriques à fonction stabilisante sont de préférence des couches d'oxyde de zinc.

La ou les couches diélectriques à fonction stabilisante peuvent se trouver au-dessus et/ou en-dessous d'au moins une couche métallique fonctionnelle à base d'argent ou de chaque couche métallique fonctionnelle à base d'argent, soit directement à son contact ou soit séparées par une couche de blocage.

Selon un mode de réalisation avantageux, l'empilement comprend une couche diélectrique à base de nitrure de silicium et/ou d'aluminium située au-dessus d'au moins une partie de la couche fonctionnelle et en-dessous de la couche inférieure de protection à base de titane et de zirconium. La couche diélectrique à base de nitrure de silicium et/ou d'aluminium a une épaisseur :
- inférieure ou égale à 100 nm, inférieure ou égale à 50 nm ou inférieure ou égale à 40 nm, et/ou
- supérieure ou égale à 15 nm, supérieure ou égale à 20 nm ou supérieure ou égale à 25 nm.

La couche diélectrique à base de nitrure de silicium et/ou d'aluminium est de préférence au-contact de la couche de protection inférieure à base de titane et de zirconium.

La couche de protection inférieure à base de titane et de zirconium est de préférence au-contact de la couche de protection supérieure.

La couche de protection supérieure est de préférence la dernière couche de l'empilement, c'est-à-dire la couche la plus éloignée du substrat revêtu de l'empilement.

Les empilements peuvent comprendre en outre des couches de blocage dont la fonction est de protéger les couches fonctionnelles en évitant une éventuelle dégradation liée au dépôt d'un revêtement à base de matériaux diélectriques ou liée à un traitement thermique. Selon un mode de réalisation, l'empilement comprend au moins une couche de blocage située en-dessous et au-contact d'une couche métallique fonctionnelle à base d'argent et/ou au moins une couche de blocage située au-dessus et au-contact d'une couche métallique fonctionnelle à base d'argent.

Parmi les couches de blocage traditionnellement utilisées notamment lorsque la couche fonctionnelle est une couche métallique à base d'argent, on peut citer les couches de blocage à base d'un métal choisi parmi le niobium Nb, le tantale Ta, le titane Ti, le chrome Cr ou le nickel Ni ou à base d'un alliage obtenu à partir d'au moins deux de ces métaux, notamment d'un alliage de nickel et de chrome (NiCr).

L'épaisseur de chaque surcouche ou sous-couche de blocage est de préférence :
- d'au moins 0,5 nm ou d'au moins 0,8 nm et/ou
- d'au plus 5,0 nm ou d'au plus 2,0 nm.

Un exemple d'empilement convenant selon l'invention comprend :
- un revêtement à base de matériaux diélectriques situé en-dessous de la couche métallique fonctionnelle à base d'argent, le revêtement pouvant comprendre au moins une couche diélectrique à base de nitrure de silicium et/ou d'aluminium,
- éventuellement une couche de blocage,
- une couche métallique fonctionnelle à base d'argent,
- éventuellement une couche de blocage,
- un revêtement à base de matériaux diélectriques situé au-dessus de la couche métallique fonctionnelle à base d'argent, le revêtement pouvant comprendre au moins une couche diélectrique à base de nitrure de silicium et/ou d'aluminium,
- un revêtement protecteur.

Les substrats transparents selon l'invention sont de préférence en un matériau rigide minéral, comme en verre, notamment silico-sodo-calcique ou organiques à base de polymères (ou en polymère).

Les substrats transparents organiques selon l'invention peuvent également être en polymère, rigides ou flexibles. Des exemples de polymères convenant selon l'invention comprennent, notamment :
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluores (FEP) ;
- les résines photoréticulables et/ou photopolymérisables, telles que les résines thiolène, polyuréthane, uréthane-acrylate, polyester-acrylate et
- les polythiouréthanes.

L'épaisseur du substrat varie généralement entre 0,5 mm et 19 mm. L'épaisseur du substrat est de préférence inférieure ou égale à 6 mm, voire 4 mm.

Le matériau, c'est-à-dire le substrat transparent revêtu de l'empilement, n'est pas traité thermiquement, mails il peut être destiné à subir un traitement thermique à température élevée choisi parmi un recuit, par exemple par un recuit flash tel qu'un recuit laser ou flammage, une trempe et/ou un bombage. La température du traitement thermique est supérieure à 400 °C, de préférence supérieure à 450 °C, et mieux supérieure à 500 °C. La mise en oeuvre ou non d'un traitement thermique sur le matériau selon l'invention dépendra de l'application à laquelle ledit matériau est destiné. Les propriétés du matériau selon l'invention, démontrées ici, à savoir la résistance aux rayures, sont indépendantes d'un quelconque traitement thermique. Le substrat revêtu de l'empilement, formant le matériau selon l'invention, peut donc être bombé ou non bombé et/ou trempé ou non trempé. On dit alors qu'il est trempable et/ou bombable.

Le substrat revêtu de l'empilement peut être est un verre bombé et/ou trempé.

Le matériau peut être sous forme de vitrage monolithique, de vitrage feuilleté ou d'un vitrage multiple notamment un double-vitrage ou un triple vitrage.

L'invention concerne également un procédé de préparation d'un matériau comprenant un substrat transparent revêtu d'un empilement de couches minces déposées par pulvérisation cathodique éventuellement assistée par champ magnétique, le procédé comporte la séquence d'étapes suivantes :
- on dépose sur le substrat transparent au moins une couche fonctionnelle, puis
- on dépose éventuellement au moins une couche diélectrique à base de nitrure de silicium et/ou d'aluminium au-dessus de la couche fonctionnelle, puis
- on dépose une couche de protection inférieure à base de titane et de zirconium, ces deux métaux étant sous forme métallique, oxydée ou nitrurée, au-dessus de la couche diélectrique à base de nitrure de silicium et/ou d'aluminium,
- on dépose une couche de protection supérieure de carbone obtenue par pulvérisation d'une cible de carbone, de préférence de graphite.

Le procédé peut comprendre en outre l'étape pendant laquelle on soumet le substrat revêtu de l'empilement de couches minces à un traitement thermique à une température supérieure à 400 °C, de préférence 500 °C.

Enfin, l'invention concerne l'utilisation d'un matériau tel que décrit précédemment pour fabriquer un vitrage. Il peut s'agir par exemple d'un vitrage de bâtiment ou de véhicule.

### Exemples

Des empilements de couches minces définis ci-après sont déposés sur des substrats en verre sodo-calcique clair d'une épaisseur de 4 mm.

Pour ces exemples, les conditions de dépôt des couches déposées par pulvérisation (pulvérisation dite « cathodique magnétron ») sont résumées dans le tableau 1 ci-dessous

Les couches d'oxyde de titane et de zirconium sont déposées à partir d'une cible céramique de TiZrOx. Le rapport titane sur zirconium Ti/Zr dans la cible est de 64:36 en poids correspondant à 77:23 atomique. Le rapport de titane sur zirconium Ti/Zr dans la couche est quasiment équivalent à celui de la cible.

| **Tableau 1** | **Cibles employées** | **Pression dépôt** | **Gaz** | **Indice*** |
|---|---|---|---|---|
| Si₃N₄ | Si:Al (92:8 % en pds) | 2-15*10⁻³ mbar | Ar:30-60 % - N₂:40-70 % | 2,00 |
| NiCr | Ni:Cr (80:20 % at.) | 1-5*10⁻³ mbar | Ar à 100 % | - |
| Ag | Ag | 2-3*10⁻³ mbar | Ar à 100 % | - |
| TiO₂ | TiOx | 1,5*10⁻³ mbar | Ar 88 % - O₂ 12 % | 2,32 |
| TiZrO | TiZrOx | 2-4*10⁻³ mbar | Ar 90 % - O₂ 10 % | 2,32 |
| C | Graphite | 1,5*10⁻³ mbar | Ar 100 % | 2.25 |

| | | | | |
|---|---|---|---|---|
| at. : atomique ; pds : poids ; * : à 550 nm. | | | | |

Les substrats revêtus d'empilements protégés selon l'invention sont trempables et bombables.

| **Vitrage** | | **Comparatif** | **Invention** |
|---|---|---|---|
| Couche de protection supérieure | C | 0,8 | 0,8 |
| Couches de protection inférieures | TiZrOx | - | 3 |
| | TiOx | 3 | - |
| Revêtement antireflet | Si₃N₄ | 35 | 35 |
| Couche blocage OB | NiCr | 0,4 | 0,4 |
| Couche fonctionnelle | Ag | 7 | 7 |
| Couche blocage UB | NiCr | 0,7 | 0,7 |
| Revêtement antireflet | Si₃N₄ | 35 | 35 |
| Substrat (mm) | verre | 4 | 4 |

Afin d'évaluer la résistance mécanique de l'empilement différents tests ont été réalisés sur le matériau selon l'invention :
- Test de rayure Erichsen (EST),
- Test Erichsen à la Brosse (EBT) avant et après trempe à 1000 cycles,
- Opel à 2000 cycles,
- Test de nettoyage.

Le test Erichsen à la Brosse (EBT) consiste à soumettre différents substrats revêtus avant (EBT) et après trempe (TT-EBT) à un certain nombre de cycles (1000) pendant lesquelles l'empilement recouvert d'eau est frotté à l'aide d'une brosse. On considère qu'un substrat satisfait au test si aucune marque n'est visible à l'œil nu. Le test avant trempe donne une bonne indication sur l'aptitude du vitrage à être rayé lors d'une opération de lavage. Le test après trempe donne une bonne indication sur la propagation des rayures après traitement thermique.

Le test de rayure Erichsen (EST) consiste à appliquer une force sur l'échantillon, en Newton, à l'aide d'une pointe (pointe de Van Laar, bille d'acier). En fonction de la résistance à la rayure de l'empilement, différents types de rayures peuvent être obtenus : continues, discontinues, larges, étroites, etc.

Le test Opel permet d'évaluer la résistance à l'abrasion. Il est réalisé conformément à la norme EN1096-2 à 2000 cycles.

Le test de nettoyage consiste à trois passages en machine à laver du substrat.

Le matériau selon l'invention satisfait à chacun de ces tests et donne du point de vue de la résistance à la rayure d'excellents résultats.

## Revendications

1. Matériau comprenant un substrat transparent revêtu d'un empilement de couches minces agissant sur le rayonnement infrarouge comprenant au moins une couche fonctionnelle, **caractérisé en ce que** l'empilement comprend un revêtement protecteur déposé au-dessus d'au moins une partie de la couche fonctionnelle, le revêtement protecteur comprenant :
- au moins une couche de protection inférieure à base de titane et de zirconium, ces deux métaux étant sous forme métallique, oxydée ou nitrurée,
- au moins une couche de protection supérieure de carbone dont l'épaisseur est inférieure ou égale à 2 nm, au sein de laquelle les atomes de carbone sont essentiellement dans un état d'hybridation sp2 située au-dessus de la couche à base de titane et de zirconium.

2. Matériau selon la revendication 1 **caractérisé en ce qu'**il peut être destiné à subir un traitement thermique.

3. Matériau selon la revendication 1, **caractérisé en ce qu'**il est non trempé.

4. Matériau selon la revendication 1, **caractérisé en ce qu'**il est trempé.

5. Matériau selon l'une des revendications précédentes, **caractérisé en ce qu'**il est trempable et/ou bombable.

6. Matériau selon l'une des revendications précédentes **caractérisé en ce que** la couche de protection inférieure a une épaisseur :
- inférieure ou égale à 5 nm, et/ou
- supérieure ou égale à 2 nm.

7. Matériau selon l'une quelconque des revendications précédentes **caractérisé en ce que** la couche de protection supérieure a une épaisseur inférieure à 1 nm.

8. Matériau selon l'une quelconque des revendications précédentes **caractérisé en ce que** la couche de protection supérieure a une épaisseur comprise entre 0,2 et 0,8 nm.

9. Matériau selon l'une quelconque des revendications précédentes, **caractérisé en ce que** l'empilement comprend une couche diélectrique à base de nitrure de silicium et/ou d'aluminium située au-dessus d'au moins une partie de la couche fonctionnelle et en-dessous de la couche inférieure de protection à base de titane et de zirconium.

10. Matériau selon la revendication 9 **caractérisé en ce que** la couche diélectrique à base de nitrure de silicium et/ou d'aluminium a une épaisseur :
- inférieure ou égale à 50 nm, et/ou
- supérieure ou égale à 20 nm

11. Matériau selon la revendication 9 ou 10 **caractérisé en ce que** la couche diélectrique à base de nitrure de silicium et/ou d'aluminium est au-contact de la couche de protection inférieure à base de titane et de zirconium.

12. Matériau selon l'une quelconque des revendications précédentes **caractérisé en ce que** la couche de protection inférieure à base de titane et de zirconium présente un rapport en poids de titane sur zirconium Ti/Zr compris entre 60/40 et 90/10.

13. Matériau selon l'une quelconque des revendications précédentes **caractérisé en ce que** la couche fonctionnelle est choisie parmi :
- une couche fonctionnelle métallique à base d'argent ou d'un alliage métallique contenant de l'argent,
- une couche fonctionnelle métallique à base de niobium,
- une couche fonctionnelle à base de nitrure de niobium.

14. Matériau selon l'une quelconque des revendications précédentes **caractérisé en ce que** l'empilement de couches minces comprend au moins une couche métallique fonctionnelle à base d'argent, au moins deux revêtements à base de matériaux diélectriques, chaque revêtement comportant au moins une couche diélectrique, de manière à ce que chaque couche métallique fonctionnelle soit disposée entre deux revêtements à base de matériaux diélectriques.

15. Matériau selon l'une quelconque des revendications 13 ou 14 **caractérisé en ce que** l'empilement comprend au moins une couche de blocage située en-dessous et au-contact d'une couche métallique fonctionnelle à base d'argent et/ou au moins une couche de blocage située au-dessus et au-contact d'une couche métallique fonctionnelle à base d'argent, la ou les couches de blocage sont à base d'un métal choisi parmi le niobium Nb, le tantale Ta, le titane Ti, le chrome Cr ou le nickel Ni ou à base d'un alliage obtenu à partir d'au moins deux de ces métaux.

16. Matériau selon l'une quelconque des revendications 13 à 15, **caractérisé en ce que** l'empilement comprend :
- un revêtement à base de matériaux diélectriques situé en-dessous de la couche métallique fonctionnelle à base d'argent, le revêtement comprenant au moins une couche diélectrique à base de nitrure de silicium et/ou d'aluminium,
- éventuellement une couche de blocage,
- une couche métallique fonctionnelle à base d'argent,
- éventuellement une couche de blocage,
- un revêtement à base de matériaux diélectriques situé au-dessus de la couche métallique fonctionnelle à base d'argent, le revêtement comprenant au moins une couche diélectrique à base de nitrure de silicium et/ou d'aluminium,
- un revêtement protecteur.

17. Matériau selon l'une quelconque des revendications précédentes tel que le substrat transparent est :
- en verre, notamment silico-sodo-calcique ou
- en polymère notamment en polyéthylène, en polyéthylène téréphtalate ou en polyéthylène naphtalate.

18. Procédé de préparation d'un matériau comprenant un substrat transparent revêtu d'un empilement de couches minces déposées par pulvérisation cathodique éventuellement assistée par champ magnétique, le procédé comporte la séquence d'étapes suivantes :
- on dépose sur le substrat transparent au moins une couche fonctionnelle, puis
- on dépose éventuellement au moins une couche diélectrique à base de nitrure de silicium et/ou d'aluminium au-dessus de la couche fonctionnelle, puis
- on dépose une couche de protection inférieure à base de titane et de zirconium, ces deux métaux étant sous forme métallique, oxydée ou nitrurée, au-dessus de la couche diélectrique à base de nitrure de silicium et/ou d'aluminium,
- on dépose une couche de protection supérieure de carbone, dont l'épaisseur est inférieure ou égale à 2 nm, obtenue par pulvérisation d'une cible de carbone, de préférence de graphite.

19. Utilisation d'un matériau, selon l'une des revendications 1 à 17, pour fabriquer un vitrage.

## Patentansprüche

1. Material, umfassend ein transparentes Substrat, das mit einem Stapel dünner Schichten beschichtet ist, die auf die Infrarotstrahlung wirken, umfassend mindestens eine Funktionsschicht, **dadurch gekennzeichnet, dass** der Stapel eine Schutzbeschichtung umfasst, die über mindestens einem Teil der Funktionsschicht aufgebracht ist, wobei die Schutzbeschichtung umfasst:
- mindestens eine untere Schutzschicht auf Basis von Titan und von Zirconium, wobei diese zwei Metalle in Metall-, Oxid- oder Nitridform vorliegen,
- mindestens eine obere Schutzschicht aus Kohlenstoff, deren Dicke kleiner oder gleich 2 nm ist, innerhalb der die Kohlenstoffatome im Wesentlichen in einem sp2-Hybridisierungszustand sind, die sich über der Schicht auf Basis von Titan und von Zirconium befindet.

2. Material nach Anspruch 1, **dadurch gekennzeichnet, dass** es dazu bestimmt sein kann, einer Wärmebehandlung unterzogen zu werden.

3. Material nach Anspruch 1, **dadurch gekennzeichnet, dass** es nicht gehärtet ist.

4. Material nach Anspruch 1, **dadurch gekennzeichnet, dass** es gehärtet ist.

5. Material nach einem der vorhergehenden Ansprüche, **dadurch gekennzeichnet, dass** es härtbar und/oder biegbar ist.

6. Material nach einem der vorhergehenden Ansprüche, **dadurch gekennzeichnet, dass** die untere Schutzschicht eine Dicke von:
- kleiner oder gleich 5 nm, und/oder
- größer oder gleich 2 nm aufweist.

7. Material nach einem der vorhergehenden Ansprüche, **dadurch gekennzeichnet, dass** die obere Schutzschicht eine Dicke von weniger als 1 nm hat.

8. Material nach einem der vorhergehenden Ansprüche, **dadurch gekennzeichnet, dass** die obere Schutzschicht eine Dicke hat, die zwischen 0,2 und 0,8 nm liegt.

9. Material nach einem der vorhergehenden Ansprüche, **dadurch gekennzeichnet, dass** der Stapel eine dielektrische Schicht auf Basis von Silicium- und/oder Aluminiumnitrid umfasst, die sich über mindestens einem Teil der Funktionsschicht und unter der unteren Schutzschicht auf Basis von Titan und von Zirconium befindet.

10. Material nach Anspruch 9, **dadurch gekennzeichnet, dass** die dielektrische Schicht auf Basis von Silicium- und/oder Aluminiumnitrid eine Dicke von:
- kleiner oder gleich 50 nm, und/oder
- größer oder gleich 20 nm aufweist

11. Material nach einem der Ansprüche 9 oder 10, **dadurch gekennzeichnet, dass** die dielektrische Schicht auf Basis von Silicium- und/oder Aluminiumnitrid in Kontakt mit der unteren Schutzschicht auf Basis von Titan und von Zirconium ist.

12. Material nach einem der vorhergehenden Ansprüche, **dadurch gekennzeichnet, dass** die untere Schutzschicht auf Basis von Titan und von Zirconium ein Gewichtsverhältnis von Titan zu Zirconium Ti/Zr aufweist, das zwischen 60/40 und 90/10 liegt.

13. Material nach einem der vorhergehenden Ansprüche, **dadurch gekennzeichnet, dass** die Funktionsschicht ausgewählt ist aus:
- einer metallischen Funktionsschicht auf Basis von Silber oder einer silberhaltigen Metalllegierung,
- einer metallischen Funktionsschicht auf Basis von Niob,
- einer Funktionsschicht auf Basis von Niobnitrid.

14. Material nach einem der vorhergehenden Ansprüche, **dadurch gekennzeichnet, dass** der Stapel dünner Schichten mindestens eine metallische Funktionsschicht auf Basis von Silber, mindestens zwei Beschichtungen auf Basis von dielektrischen Materialien umfasst, wobei jede Beschichtung mindestens eine dielektrische Schicht aufweist, sodass jede metallische Funktionsschicht zwischen zwei Beschichtungen auf Basis von dielektrischen Materialien angeordnet ist.

15. Material nach einem der Ansprüche 13 oder 14, **dadurch gekennzeichnet, dass** der Stapel mindestens eine Blockierschicht umfasst, die sich unter und in Kontakt mit einer metallischen Funktionsschicht auf Basis von Silber befindet und/oder mindestens eine Blockierschicht, die sich über und in Kontakt mit einer metallischen Funktionsschicht auf Basis von Silber befindet, wobei die Blockierschicht(en) auf Basis eines Metalls, das aus Niob Nb, Tantal Ta, Titan Ti, Chrom Cr oder Nickel Ni ausgewählt ist, oder auf Basis einer Legierung ist/sind, die aus mindestens zwei dieser Metalle erhalten wird.

16. Material nach einem der Ansprüche 13 bis 15, **dadurch gekennzeichnet, dass** der Stapel umfasst:
- eine Beschichtung auf Basis von dielektrischen Materialien, die sich unter der metallischen Funktionsschicht auf Basis von Silber befindet, wobei die Beschichtung mindestens eine dielektrische Schicht auf Basis von Silicium- und/oder Aluminiumnitrid umfasst,
- gegebenenfalls eine Blockierschicht,
- eine metallische Funktionsschicht auf Basis von Silber,
- gegebenenfalls eine Blockierschicht,
- eine Beschichtung auf Basis von dielektrischen Materialien, die sich über der metallischen Funktionsschicht auf Basis von Silber befindet, wobei die Beschichtung mindestens eine dielektrische Schicht auf Basis von Silicium- und/oder Aluminiumnitrid umfasst,
- eine Schutzbeschichtung.

17. Material nach einem der vorhergehenden Ansprüche, wobei das transparente Substrat besteht:
- aus Glas, insbesondere Kalk-Natron-Silikatglas, oder
- aus Polymer, insbesondere aus Polyethylen, aus Polyethylenterephthalat oder aus Polyethylennaphthalat.

18. Verfahren zur Herstellung eines Materials, umfassend ein transparentes Substrat, das mit einem Stapel dünner Schichten beschichtet ist, die durch gegebenenfalls magnetfeldgestützte Kathodenzerstäubung aufgebracht werden, wobei das Verfahren die Sequenz folgender Schritte umfasst:
- Aufbringen mindestens einer Funktionsschicht auf das transparente Substrat, dann
- Aufbringen gegebenenfalls mindestens einer dielektrischen Schicht auf Basis von Silicium- und/oder Aluminiumnitrid über der Funktionsschicht, dann
- Aufbringen einer unteren Schutzschicht auf Basis von Titan und von Zirconium, wobei diese zwei Metalle in Metall-, Oxid- oder Nitridform vorliegen, über der dielektrischen Schicht auf Basis von Silicium- und/oder Aluminiumnitrid,
- Aufbringen einer oberen Schutzschicht aus Kohlenstoff, deren Dicke kleiner oder gleich 2 nm ist, erhalten durch Zerstäuben eines Kohlenstoff-, vorzugsweise Graphittargets.

19. Verwendung eines Materials nach einem der Ansprüche 1 bis 17 zum Fertigen einer Verglasung.

## Claims

1. A material comprising a transparent substrate coated with a stack of thin layers acting on infrared radiation comprising at least one functional layer, **characterized in that** the stack comprises a protective coating deposited above at least a part of the functional layer, the protective coating comprising:
- at least one lower protective layer based on titanium and zirconium, these two metals being in the metal, oxidized or nitrided form,
- at least one upper protective layer of carbon having a thickness of less than or equal to 2 nm, within which layer the carbon atoms are essentially in an sp² hybridization state, located above the layer based on titanium and zirconium.

2. The material as claimed in claim 1, **characterized in that** it may be intended to undergo a heat treatment.

3. The material as claimed in claim 1, **characterized in that** it is untempered.

4. The material as claimed in claim 1, **characterized in that** it is tempered.

5. The material as claimed in one of the preceding claims, **characterized in that** it can be tempered and/or bent.

6. The material as claimed in one of the preceding claims, **characterized in that** the lower protective layer has a thickness:
- of less than or equal to 5 nm, and/or
- of greater than or equal to 2 nm.

7. The material as claimed in any one of the preceding claims, **characterized in that** the upper protective layer has a thickness of less than 1 nm.

8. The material as claimed in any one of the preceding claims, **characterized in that** the upper protective layer has a thickness of between 0.2 and 0.8 nm.

9. The material as claimed in any one of the preceding claims, **characterized in that** the stack comprises a dielectric layer based on silicon and/or aluminum nitride located above at least a part of the functional layer and below the lower protective layer based on titanium and zirconium.

10. The material as claimed in claim 9, **characterized in that** the dielectric layer based on silicon and/or aluminum nitride has a thickness:
- of less than or equal to 50 nm, and/or
- of greater than or equal to 20 nm.

11. The material as claimed in claim 9 or 10, **characterized in that** the dielectric layer based on silicon and/or aluminum nitride is in contact with the lower protective layer based on titanium and zirconium.

12. The material as claimed in any one of the preceding claims, **characterized in that** the lower protective layer based on titanium and zirconium exhibits a ratio by weight of titanium to zirconium Ti/Zr of between 60/40 and 90/10.

13. The material as claimed in any one of the preceding claims, **characterized in that** the functional layer is chosen from:
- a functional metal layer based on silver or on a silver-containing metal alloy,
- a functional metal layer based on niobium,
- a functional layer based on niobium nitride.

14. The material as claimed in any one of the preceding claims, **characterized in that** the stack of thin layers comprises at least one silver-based functional metal layer, and at least two coatings based on dielectric materials, each coating comprising at least one dielectric layer, so that each functional metal layer is positioned between two coatings based on dielectric materials.

15. The material as claimed in either one of claims 13 or 14, **characterized in that** the stack comprises at least one blocking layer located below and in contact with a silver-based functional metal layer and/or at least one blocking layer located above and in contact with a silver-based functional metal layer; the blocking layer or layers are based on a metal chosen from niobium Nb, tantalum Ta, titanium Ti, chromium Cr or nickel Ni or based on an alloy obtained from at least two of these metals.

16. The material as claimed in any one of claims 13 to 15, **characterized in that** the stack comprises:
- a coating based on dielectric materials located below the silver-based functional metal layer, the coating comprising at least one dielectric layer based on silicon and/or aluminum nitride,
- optionally a blocking layer,
- a silver-based functional metal layer,
- optionally a blocking layer,
- a coating based on dielectric materials located above the silver-based functional metal layer, the coating comprising at least one dielectric layer based on silicon and/or aluminum nitride,
- a protective coating.

17. The material as claimed in any one of the preceding claims, such that the transparent substrate is:
- made of glass, in particular soda-lime-silica glass, or
- made of polymer, in particular of polyethylene, of polyethylene terephthalate or of polyethylene naphthalate.

18. A process for the preparation of a material comprising a transparent substrate coated with a stack of thin layers deposited by cathode sputtering, optionally assisted by a magnetic field; the process comprises the sequence of the following stages:
- at least one functional layer is deposited on the transparent substrate, then
- at least one dielectric layer based on silicon and/or aluminum nitride is optionally deposited above the functional layer, then
- a lower protective layer based on titanium and zirconium, these two metals being in a metal, oxidized or nitrided form, is deposited above the dielectric layer based on silicon and/or aluminum nitride,
- an upper protective layer of carbon having a thickness of less than or equal to 2 nm, obtained by sputtering of a carbon target, preferably a graphite target, is deposited.

19. The use of a material as claimed in one of claims 1 to 17, for manufacturing a glazing.
